# EUROPEAN PATENT APPLICATION

(11) **EP 4 821 979 A1**
(43) Date of publication of application: **14.10.2026**
(21) Application number: 24900424.3
(22) Date of filing: 19.11.2024
(51) Int. Cl.: C08L 7/00, B60C 1/00, C08K 3/04, C08K 3/36, C08L 101/00

(54) **TREAD RUBBER COMPOSITION AND TIRE**

(30) Priority: 07.12.2023 JP 2023207260
(71) Applicant: BRIDGESTONE CORPORATION, Chuo-ku Tokyo 104-8340 (JP)
(72) Inventor: MITO Kei, Tokyo 104-8340 (JP)
(74) Representative: Marks & Clerk LLP
(86) International application number: PCT/JP2024/041024
(87) International publication number: WO 2025/121129

(57) **Abstract**

With the aim of providing a rubber composition for tread that is excellent in wear resistance and rupture resistance without deteriorating other physical properties, a rubber composition contains a rubber component, carbon black, silica, and a resin, wherein the rubber component includes high-purity natural rubber having a nitrogen content of 0.3 mass% or less, the resin has a softening point of 130°C or higher and a content of 1 part by mass or more per 100 parts by mass of the rubber component, and total content of the carbon black and the silica is 50 parts by mass or more per 100 parts by mass of the rubber component.

## Description

### TECHNICAL FIELD

The present disclosure relates to a rubber composition for tread and a tire.

### BACKGROUND

Conventionally, in heavy-duty pneumatic tires for rough roads, as a method for preventing deterioration of heat buildup performance, appearance performance, wear resistance, and the like, selection of carbon black to be blended in the tire tread rubber composition and optimization of its filling amount have been carried out. In recent years, various tread rubbers for heavy-duty pneumatic tires have also been proposed in which silica is blended together with carbon black in the tread rubber composition.

For example, PTL 1 to PTL 3 disclose techniques in which silica is blended together with carbon black in a tread rubber composition for heavy-duty pneumatic tires such as those for construction vehicles, thereby aiming to improve wear resistance, anti-cut resistance, heat buildup performance, and the like.

### CITATION LIST

### Patent Literature

PTL 1: JP H1-311141 A
PTL 2: JP H3-65406 A
PTL 3: JP H4-226140 A

### SUMMARY

### (Technical Problem)

However, with respect to the techniques of PTL 1 to PTL 3, in the tread rubber composition for heavy-duty pneumatic tires, none were sufficient as attempts to improve heat buildup performance, appearance performance, and wear resistance after running, and further to suppress deterioration of physical properties. In particular, further improvement was desired in wear resistance and rupture resistance.

Accordingly, an object of the present disclosure is to provide a tread rubber composition excellent in wear resistance and rupture resistance without deteriorating other physical properties.

Further, an object of the present disclosure is to provide a tire excellent in wear resistance and rupture resistance without deteriorating other physical properties.

### (Solution to Problem)

The gist configuration of the present disclosure for solving the above problems is as follows.

A rubber composition for tread comprising a rubber component, carbon black, silica, and a resin, wherein
the rubber component includes high-purity natural rubber having a nitrogen content of 0.3 mass% or less,
the resin has a softening point of 130°C or higher and a content of 1 part by mass or more per 100 parts by mass of the rubber component, and
total content of the carbon black and the silica is 50 parts by mass or more per 100 parts by mass of the rubber component.

The tread rubber composition having the above configuration is excellent in wear resistance and rupture resistance without deteriorating other physical properties.

A tire comprising the above rubber composition for tread.

The tire having the above configuration is excellent in wear resistance and rupture resistance without deteriorating other physical properties.

### (Advantageous Effect)

According to the present disclosure, it is possible to provide a tread rubber composition excellent in wear resistance and rupture resistance without deteriorating other physical properties.

Further, according to the present disclosure, it is possible to provide a tire excellent in wear resistance and rupture resistance without deteriorating other physical properties.

### DETAILED DESCRIPTION

Hereinafter, an embodiment of the tread rubber composition and tire of the present disclosure will be illustratively described.

### (Definitions)

It should be noted that the compounds described in the present specification may be partially or entirely derived from fossil resources, derived from bio-resources such as plant resources, or derived from recycled resources such as used tires. Furthermore, they may be derived from a mixture of any two or more of fossil resources, bio-resources, and recycled resources.

### (Tread Rubber Composition)

The tread rubber composition of the present disclosure comprises a rubber component, carbon black, silica, and a resin.

Hereinafter, each component constituting the tread rubber composition of the present disclosure will be described.

### (Rubber Component)

The rubber component contained in the tread rubber composition of the present disclosure includes high-purity natural rubber having a nitrogen content of 0.3 mass% or less.

By including the high-purity natural rubber, an excessive amount of protein is not contained in the natural rubber, and as a result, gelation can be suppressed, thereby achieving excellent wear resistance.

From the same viewpoint, it is preferable that the nitrogen content in the natural rubber is 0.25 mass% or less, and more preferably 0.2 mass% or less.

Here, as long as the high-purity natural rubber has a nitrogen content of 0.3 mass% or less, other requirements are not particularly limited. For example, the high-purity natural rubber may be natural rubber from which protein has been removed by a centrifugal separation process.

The centrifugal separation process is a process in which deproteinization is performed by centrifugal separation from natural rubber latex, which is the raw material of natural rubber. The conditions of the centrifugal separation (rotational speed, time, etc.) are not particularly limited and may be appropriately changed according to the amount of protein to be removed. For example, when the nitrogen content in the natural rubber is to be set to 0.1 mass% or less, the centrifugal separation process may be performed several times at a rotational speed of about 7500 rpm.

After the centrifugal separation process, high-purity natural rubber can be obtained by performing washing and drying treatment.

The natural rubber latex used in the centrifugal separation process is not particularly limited. For example, field latex collected from rubber trees or concentrated natural rubber latex processed therefrom may be used. Also, the dry rubber content in the natural rubber latex is not particularly limited, but from the viewpoint of obtaining better wear resistance, it is preferable to be 10 mass% or more, more preferably 30 mass%, and even more preferably 40 mass% or more.

The content of the high-purity natural rubber in the rubber component may be 100%, but as long as the purpose of the present disclosure is not impaired, other rubbers may also be included. Furthermore, the natural rubber may be not only the high-purity natural rubber but also a mixture with ordinary natural rubber.

In that case, from the viewpoint of further improving wear resistance, it is preferable that the content of the high-purity natural rubber in the rubber component is 50 mass% or more, more preferably 70 mass% or more, and particularly preferably 90 mass% or more.

The rubber component may also contain other synthetic rubbers in addition to the above-described natural rubber. Examples of synthetic rubbers include diene-based synthetic rubbers such as butadiene rubber (BR), isoprene rubber (IR), styrene-butadiene rubber (SBR), styrene-isoprene-butadiene rubber (SIBR), chloroprene rubber (CR), acrylonitrile-butadiene rubber (NBR), and non-diene-based synthetic rubbers such as ethylene-propylene-diene rubber (EPDM), ethylene-propylene rubber (EPM), and butyl rubber (IIR).

Among the above-described synthetic rubbers, it is preferable that the rubber component contains butadiene rubber and/or styrene-butadiene rubber. This is because a higher level of both low loss property and wear resistance can be achieved.

The natural rubber and the diene-based synthetic rubber (hereinafter collectively referred to as "diene-based rubber") may be diene-based rubber that has not been modified (hereinafter sometimes referred to as "unmodified diene-based rubber") or diene-based rubber that has been modified (hereinafter sometimes referred to as "modified diene-based rubber").

### (Carbon Black)

The rubber composition of the present disclosure further contains carbon black in addition to the above-described rubber component.

This is because the reinforcing property of the rubber composition is enhanced, and excellent wear resistance and rupture resistance can be obtained.

Here, as the carbon black, it is preferable that the nitrogen adsorption specific surface area (N₂SA) is 135 to 180 m²/g. When the N₂SA of the carbon black is 135 m²/g or more, better wear resistance can be obtained, and when the N₂SA of the carbon black is 180 m²/g or less, deterioration in productivity and low heat generating property can be suppressed.

From the same viewpoint, it is preferable that the N₂SA of the carbon black is 140 to 170 m²/g.

The nitrogen adsorption specific surface area (N₂SA) of the carbon black can be measured, for example, in accordance with JIS K 6217-7:2013.

It is also preferable that the carbon black has a dibutyl phthalate (DBP) oil absorption of 80 to 120 ml/100 g. When the DBP oil absorption of the carbon black is 80 m²/g or more, deterioration in low heat generating property and productivity can be suppressed, and when the N₂SA of the carbon black is 120 ml/100 g or less, gelation can be suppressed and better wear resistance can be obtained.

From the same viewpoint, it is preferable that the DBP of the carbon black is 85 to 110 m²/g, and more preferably 85 to 100 m²/g.

The DBP oil absorption of the carbon black can be measured in accordance with JIS K 6217-4:2017.

In the tread rubber composition for tires of the present disclosure, the total content of the carbon black and the silica described later must be 50 parts by mass or more per 100 parts by mass of the rubber component.

By setting the total content of the carbon black and the silica to 50 parts by mass or more per 100 parts by mass of the rubber component, the reinforcing property of the tire is enhanced, and better wear resistance can be achieved. From the same viewpoint, it is preferable that the total content of the silica and the carbon black is 60 parts by mass or more per 100 parts by mass of the rubber component, and more preferably 65 parts by mass or more. On the other hand, from the viewpoint of suppressing deterioration in processability and low heat generating property of the rubber composition, it is preferable that the total content of the silica and the carbon black is 80 parts by mass or less per 100 parts by mass of the rubber component, more preferably 75 parts by mass or less, and even more preferably 70 parts by mass or less.

The content of the carbon black alone is preferably 40 parts by mass or more per 100 parts by mass of the rubber component, more preferably 46 parts by mass or more, and even more preferably 50 parts by mass or more. When the content of the carbon black is 40 parts by mass or more per 100 parts by mass of the rubber component, the reinforcing property is enhanced and better wear resistance can be obtained. On the other hand, the content of the carbon black is preferably 60 parts by mass or less per 100 parts by mass of the rubber component, and more preferably 55 parts by mass or less. When the content of the carbon black is 60 parts by mass or less per 100 parts by mass of the rubber component, deterioration in low heat generating property can be suppressed.

The carbon black may also include recovered carbon black. In the present specification, "recovered carbon black" refers to carbon black obtained by recovering from raw materials that are waste subjected to recycling. Examples of such waste subjected to recycling include rubber products containing carbon black (particularly vulcanized rubber products) such as used rubber and used tires, and waste oil. "Recovered carbon black" is different from carbon black manufactured directly from hydrocarbons such as petroleum or natural gas, that is, carbon black that is not a recycled product. Here, "used" includes not only those that have actually been used and then discarded, but also those that have been manufactured but discarded without actually being used.

### (Silica)

The tread rubber composition for tires of the present disclosure contains silica in addition to the above-described rubber component and carbon black.

By including the silica, the reinforcing property and rupture resistance of the tire can be enhanced.

The content of the silica needs to satisfy the total content with the above-described carbon black, but from the viewpoint of achieving better rupture resistance, it is preferable that the content of the silica alone is 5 to 25 parts by mass per 100 parts by mass of the rubber component.

By setting the content of the silica to 5 parts by mass or more per 100 parts by mass of the rubber component, the reinforcing property of the tire is enhanced, and better wear resistance and rupture resistance can be achieved. From the same viewpoint, it is preferable that the content of the silica is 10 parts by mass or more per 100 parts by mass of the rubber component. On the other hand, from the viewpoint of suppressing deterioration in processability of the rubber composition, by setting the content of the silica to 25 parts by mass or less per 100 parts by mass of the rubber component, wear resistance and rupture resistance can be improved while suppressing deterioration in processability and operability. From the same viewpoint, it is preferable that the content of the silica is 20 parts by mass or less per 100 parts by mass of the rubber component.

Here, as the silica, it is preferable that the CTAB specific surface area is 200 to 240 ml/100 g. When the CTAB specific surface area of the silica is 200 ml/100 g or more, better rupture resistance improvement effect can be obtained, and when the CTAB specific surface area of the silica is 240 ml/100 g or less, poor dispersion and decrease in processability can be suppressed.

The CTAB specific surface area of the silica can be measured, for example, in accordance with JIS K 6430:2008.

Examples of the silica include wet silica (hydrous silicate), dry silica (anhydrous silicate), calcium silicate, aluminum silicate, and the like. Among these, wet silica is preferable because it has many silanol groups. These silicas may be used alone or in combination of two or more kinds.

From the viewpoint of reducing environmental load, silica derived from plant-based silicate is also preferable as the silica. Such plant-based silicate is present, for example, in plants such as bryophytes, ferns, horsetails, Cucurbitaceae, Urticaceae, and Poaceae. Among these plants, Poaceae plants are preferable. Examples of such Poaceae plants include rice, bamboo grass, and sugarcane, among which rice is preferable. Since rice is widely cultivated for food, it can be locally procured in a wide area, and rice husks are generated in large quantities as industrial waste, making it easy to secure the quantity. Therefore, from the viewpoint of ease of procurement, silica derived from rice husks (hereinafter also referred to as "rice husk silica") is particularly preferable as the silica. By using rice husk silica, rice husks, which are industrial waste, can be effectively utilized, and since raw materials can be locally procured near the tire manufacturing plant, energy and cost for transportation and storage can be reduced, and from various viewpoints, it is preferable in terms of the environment. The rice husk silica may be a powder of rice husk charcoal obtained by carbonizing rice husks by heating, or may be precipitated silica produced by preparing an alkali silicate aqueous solution by extracting rice husk ash generated when rice husks are burned as fuel in a biomass boiler with alkali, and producing by a wet process using the alkali silicate aqueous solution. The method for producing the rice husk charcoal is not particularly limited, and various known methods can be used. For example, rice husk charcoal can be obtained by pyrolyzing rice husks by steaming in a kiln. The rice husk charcoal thus obtained can be pulverized using a known pulverizer (for example, a ball mill), and classified and sorted into a predetermined particle size range to obtain a powder of rice husk charcoal. The precipitated silica derived from rice husks can be produced by a method described in JP 2019-38728 A or the like.

### (Resin)

The tread rubber composition of the present disclosure contains a resin in addition to the above-described rubber component, silica, and carbon black.

The resin has a softening point of 130°C or higher. By setting the softening point of the resin to 130°C or higher, rupture resistance can be improved. From the same viewpoint, 140°C or higher is preferable, and 145°C or higher is more preferable.

In the present specification, the softening point of the resin is the softening point as defined in JIS K 6220-1:2015 (ISO 28641:2010), measured using a ring-and-ball softening point measuring device, and is the temperature at which the ball descends.

Here, the type of resin is not particularly limited as long as the softening point is 130°C or higher. Examples include terpene-based resins, rosin-based resins, C₅-based resins, C₅-C₉-based resins, C₉-based resins, dicyclopentadiene-based resins, aromatic-based resins, coumarone resin, indene resin, coumarone-indene-based resins, olefinbased resins, polyurethane resins, acrylic resins, and the like. These resins may be used alone or in combination of two or more kinds.

Among the above-described resins, it is preferable that the resin is a cyclopentadiene-based resin, and more preferably a dicyclopentadiene-based resin. This is because better rupture resistance can be achieved. The dicyclopentadiene-based resin refers to a resin obtained by polymerizing dicyclopentadiene using, for example, a Friedel-Crafts catalyst such as AlCl₃ or BF₃. Examples of dicyclopentadiene-based resins include a homopolymer of dicyclopentadiene, a copolymer of dicyclopentadiene and an aromatic monomer, a copolymer of dicyclopentadiene and a C₉ fraction (vinyltoluene, indene, etc.), and the like.

Furthermore, the content of the resin is 1 part by mass or more per 100 parts by mass of the rubber component, and more preferably 1.5 parts by mass or more. This is because the above-described effect of improving rupture resistance can be more effectively exhibited.

From the viewpoint of suppressing deterioration in low heat generating property, the content of the resin is preferably 10 parts by mass or less per 100 parts by mass of the rubber component, and more preferably 5 parts by mass or less.

### (Antioxidant)

The tread rubber composition of the present disclosure preferably contains an antioxidant in addition to the above-described rubber component, silica, carbon black, and resin. By including an antioxidant in the tread rubber composition, the reinforcing property and wear resistance of the tread rubber composition can be enhanced.

Here, the content of the antioxidant is preferably 1 part by mass or more per 100 parts by mass of the rubber component. This is because the effect of improving the reinforcing property and wear resistance of the tread rubber composition by the antioxidant can be more effectively exhibited.

On the other hand, it is also preferable that the content of the antioxidant is less than 3 parts by mass per 100 parts by mass of the rubber component. When the content of the antioxidant is less than 3 parts by mass per 100 parts by mass of the rubber component, better rupture resistance can be obtained. From the same viewpoint, it is preferable that the content of the antioxidant is less than 2 parts by mass per 100 parts by mass of the rubber component.

The type of antioxidant is not particularly limited. For example, amine-based antioxidants, phenol-based antioxidants, and other antioxidants can be used.

Among these antioxidants, from the viewpoint of obtaining better wear resistance, it is preferable to use at least an amine-based antioxidant.

As the amine-based antioxidant, it is preferable to use at least one selected from the group consisting of N-(1,3-dimethylbutyl)-N'-phenyl-p-phenylenediamine, N-isopropyl-N'-p-phenylenediamine, N-(3-methacryloyloxy-2-hydroxypropyl)-N'-phenyl-p-phenylenediamine, and N,N'-di-2-naphthyl-p-phenylenediamine. Among these, N-(1,3-dimethylbutyl)-N'-phenyl-p-phenylenediamine is particularly preferable.

The amine-based antioxidant may be used alone or in combination of two or more kinds.

### (Sulfur, Vulcanization Accelerator)

The tread rubber composition of the present disclosure preferably contains sulfur as a crosslinking agent in addition to the above-described components.

This is because the durability and other physical properties of the tread rubber composition of the present disclosure can be improved.

Furthermore, from a similar perspective, the rubber composition for tread of the present disclosure preferably contains a vulcanization accelerator in addition to the above-described components.

Here, the type of the vulcanization accelerator is not particularly limited, and examples include thiazole vulcanization accelerators such as 2-mercaptobenzothiazole and dibenzothiazyl disulfide; sulfenamide vulcanization accelerators such as N-cyclohexyl-2-benzothiazylsulfenamide and N-t-butyl-2-benzothiazylsulfenamide; guanidine vulcanization accelerators such as diphenyl guanidine; thiuram vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate vulcanization accelerators such as zinc dimethyldithiocarbamate; and zinc dialkyldithiophosphate, among others.

Furthermore, among the above-described vulcanization accelerators, from the viewpoint of controlling vulcanization rate and degree of vulcanization and improving rupture resistance, it is preferable to use at least a sulfenamide vulcanization accelerator, and it is more preferable to use N-cyclohexyl-2-benzothiazylsulfenamide.

In addition, regarding the content of the vulcanization accelerator, it is preferable that it is 1 part by mass or more per 100 parts by mass of the rubber component, and more preferably 1.4 parts by mass or more. This is because it is possible to appropriately control the vulcanization rate while improving various physical properties such as the durability of the tire.

Furthermore, it is preferable that the mass ratio of the content of the resin to the content of the vulcanization accelerator is 9 or less (content of resin/content of vulcanization accelerator ≤ 9). This is because it is possible to control the vulcanization rate and degree of vulcanization and improve various physical properties such as the durability of the tire. From a similar perspective, it is more preferable that the mass ratio of the content of the resin to the content of the vulcanization accelerator is 2 or less (content of resin/content of vulcanization accelerator ≤ 2).

### (Other Components)

The rubber composition for tread of the present disclosure may further contain, in addition to the above-described components, other components as appropriate, selected as needed or for specific purposes, within a range that does not impair the effects of the present disclosure. Examples of such other components include silane coupling agents; inorganic fillers other than silica and carbon black; softeners; tackifiers; dispersants; crosslinking coagents; stearic acid; colorants; antistatic agents; lubricants; and other additives, as well as various known compounding agents commonly used in the rubber industry. These may be commercially available products.

As for the silane coupling agent, examples include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, 3-octanoylthiopropyltriethoxysilane, 3-mercaptopropyltrimethoxysilane, 3-mercaptopropyltriethoxysilane, vinyltriethoxysilane, vinyltrimethoxysilane, 3-aminopropyltriethoxysilane, 3-aminopropyltrimethoxysilane, 3-mercaptopropylmethyldimethoxysilane, γ-glycidoxypropyltrimethoxysilane, γ-glycidoxypropylmethyldiethoxysilane, 3-[ethoxybis(3,6,9,12,15-pentaoxaoctacosan-1-yloxy)silyl]-1-propanethiol (trade name "Si363" by Degussa AG), and the like. These silane coupling agents may be used singly or in combination of two or more.

It is also possible to use bioethanol as a raw material for the silane coupling agent. The bioethanol is produced mainly from saccharides and/or cellulose as biological resources, and cannot effectively utilize other biological resources such as proteins, lipids, and amino acids. Furthermore, saccharides compete with food, and excessive use of cellulose leads to deforestation. Therefore, depending on the supply situation of various biological resources, the supply situation of recycled resources, the supply situation of fossil resources, and market demands (for example, demand for biomass resources as food), it is preferable to use a plurality of types of monomer components derived from biological resources as the monomer components derived from biological resources, or to use a combination of monomer components derived from biological resources, recycled resources, and fossil resources. In this way, it is possible to effectively utilize a wide range of biological resources such as sugars, proteins, and lipids, as well as recycled resources, without relying on a single biological resource, and to take environmental considerations into account according to the manufacturing situation.

Examples of inorganic fillers other than silica and carbon black include aluminum hydroxide and clay. Among these inorganic fillers, aluminum hydroxide and the like are preferable because of their relatively high reinforcing properties, and clay and the like are effective because of the effects obtained by utilizing their shape characteristics.

Furthermore, the softener is not particularly limited and may be appropriately selected according to the intended purpose. Examples include naphthenic base oil, paraffin base oil, and aromatic base oil. Here, the content of the softener is preferably 0 to 30 parts by mass per 100 parts by mass of the rubber component. If the content of the softener exceeds 30 parts by mass per 100 parts by mass of the rubber component, there is a risk that the softener may bleed out to the surface of the rubber product or that the wear resistance may decrease.

Furthermore, among the above-described softeners, it is preferable to use naphthenic base oil or paraffin base oil, and most preferable to use naphthenic base oil. This is because aromatic oil contains a large amount of aromatic components, has high affinity with such chemicals as aromatic compounds, and is more likely to inhibit reactions with the polymer, making it undesirable. On the other hand, naphthenic base oil and paraffin base oil have the effect of assisting diffusion and reaction within the polymer, and oils with lower pour points diffuse better within the polymer.

The classification of naphthenic base oil, paraffin base oil, and aromatic base oil is determined by CA value, CP value, and CN value. For example, those classified as naphthenic base oil include TDAE, SRAE, RAE, and Black Oil. Those classified as paraffin base oil include spindle oil and paraffin oil.

Furthermore, mixed oils such as A/O Mix (SANKYO YUKA KOGYO K.K.), which is a mixture of naphthenic base oil and naphthenic asphalt, can also provide more preferable effects.

The timing of blending these lubrication oils is not particularly limited; for example, the oil may be extended during the production stage of the rubber component, or may be added during the kneading of the rubber composition for tread.

### (Production of Rubber Composition for Tread)

The method for producing the rubber composition for tread of the present disclosure is not particularly limited, but for example, the rubber composition can be produced by blending the above-described rubber component with various components selected as needed, followed by kneading, warming, extrusion, and the like.

Further, by vulcanizing the obtained rubber composition, a vulcanized rubber can be obtained.

The kneading conditions are not particularly limited, and various conditions such as the input volume of the kneading apparatus, the rotational velocity of the rotor, ram pressure, kneading temperature, kneading time, and type of kneading apparatus may be appropriately selected according to the intended purpose. Examples of kneading apparatuses include Banbury mixers, Intermix, kneaders, and rolls, which are commonly used for kneading rubber compositions.

The conditions for warming are also not particularly limited, and various conditions such as warming temperature, warming time, and warming apparatus may be appropriately selected according to the intended purpose. Examples of warming apparatuses include warming roll machines commonly used for warming rubber compositions.

The conditions for extrusion are also not particularly limited, and various conditions such as extrusion time, extrusion speed, extrusion apparatus, and extrusion temperature may be appropriately selected according to the intended purpose. Examples of extrusion apparatuses include extruders commonly used for extruding rubber compositions. The extrusion temperature may be determined as appropriate.

The apparatus, method, and conditions for vulcanization are also not particularly limited and may be appropriately selected according to the intended purpose. Examples of apparatuses for vulcanization include molding vulcanizers using molds, which are commonly used for vulcanizing rubber compositions. As for the vulcanization conditions, the temperature is, for example, about 100 to 190°C.

### (Tire)

The tire of the present disclosure is characterized by comprising the above-described rubber composition for tread of the present disclosure. By including the rubber composition for tread of the present disclosure as a tire material, excellent wear resistance and rupture resistance can be achieved without deteriorating other physical properties.

Here, the tire of the present disclosure can be used, for example, as a heavy-duty tire, a truck/bus tire, an aircraft tire, or a passenger vehicle tire, but among these, it is preferable to use it as a heavy-duty tire. This is because the rubber composition for tread used as the material for the tread portion is excellent in wear resistance and rupture resistance, and thus provides significant advantages when used as a heavy-duty tire.

When using the above-described rubber composition for tread of the present disclosure, for example, it may be obtained by molding using an unvulcanized rubber composition and then vulcanizing, or by molding using a semi-vulcanized rubber that has undergone a preliminary vulcanization step and then further vulcanizing. The tire of the present embodiment is preferably a pneumatic tire, and as the gas to be filled in the pneumatic tire, in addition to ordinary air or air with adjusted oxygen partial pressure, inert gases such as nitrogen, argon, and helium can be used.

In the tire of the present disclosure, it is required to apply the above-described rubber composition for tread of the present disclosure to the tread (base tread, cap tread, under tread), but it can also be applied to various other structural members. For example, it can be used for cushion rubber, shoulder, sidewall, clinch, bead filler, coating rubber for carcass, insulation, chafer, inner liner, and the like, and can also be used for side reinforcing layers of run flat tires and the like. Furthermore, the rubber composition for tread of the present disclosure can also be applied to rubber crawlers, seismic isolation rubber, and the like, in addition to tires.

### EXAMPLES

The present disclosure will be described in more detail below with reference to examples, but the present disclosure is not limited to the following examples in any way.

### [Examples 1-1 to 2-4, Comparative Examples 1-1 to 2-3]

Samples of the rubber composition for tread are assumed to be prepared by blending each component according to the formulations indicated in Table 1 and Table 2 and kneading using a Banbury mixer. Although not indicated in Table 1 and Table 2, various processing aids, additives, and vulcanization chemicals are appropriately added within a range that does not affect the effects of the present disclosure during sample preparation.

### (Evaluation)

For each sample of the rubber composition for tread, it is assumed that after extrusion into a sheet, vulcanization is performed at 145°C for 90 minutes to prepare a vulcanized rubber sample. The following evaluations are assumed to be performed on the obtained vulcanized rubber samples.

### (1) Evaluation of Low Heat Generating Property

For each vulcanized rubber sample, the loss tangent (tanδ) is assumed to be measured under the conditions of temperature 23°C, initial load 1600 mN, dynamic strain 1%, and frequency 52 Hz using a spectrometer (manufactured by Ueshima Seisakusho Co., Ltd.).

Using the measurement results of the loss tangent (tanδ) for formulations not indicated in the tables, performance impact simulations due to formulation changes were conducted, and the loss tangent (tanδ) for the formulations listed in the tables was predicted. For evaluation, the reciprocal of the measured value of tanδ was taken, and the index was indicated with the reciprocal value of tanδ for the samples of Comparative Example 1-1 and Comparative Example 2-1 set to 100, respectively. The larger the index value, the better the low heat generating property. The evaluation results are presented in Table 1 and Table 2. Furthermore, an index value of 95 or more is evaluated as excellent in low heat generating property, and an index value of 90 or more is evaluated as having no impact on tire performance.

### (2) Evaluation of Wear Resistance

For each vulcanized rubber sample, it is assumed that the wear rate is measured by rolling on an abrasive at a constant speed.

Using the measurement results for formulations not indicated in the tables, performance impact simulations due to formulation changes were conducted, and the wear rate for the formulations listed in the tables was predicted. For evaluation, the reciprocal of the wear rate was calculated, and the index was indicated with the reciprocal of the wear rate for the vulcanized rubber made from the rubber composition of Comparative Example 1-1 and Comparative Example 2-1 set to 100, respectively. The larger the index value, the slower the wear rate and the better the wear resistance. The evaluation results are presented in Table 1 and Table 2.

### (3) Evaluation of Rupture Resistance and Rupture Resistance after Aging

For each vulcanized rubber sample, it is assumed that the rupture strength and the rupture strength after thermal aging at 100°C for 24 hours (rupture strength after aging) are measured.

Using the measurement results for formulations not indicated in the tables, performance impact simulations due to formulation changes were conducted, and the rupture resistance and rupture resistance after aging for the formulations listed in the tables were predicted. For evaluation, the index value was indicated with the measurement results of Comparative Example 1-1 and Comparative Example 2-1 set to 100, respectively, and the larger the index value, the better the rupture resistance and rupture resistance after aging. The evaluation results are presented in Table 1 and Table 2.

**[Table 1]**

| | Example 1-1 | Comparative Example 1-1 | Example 1-2 | Example 1-3 |
|---|---|---|---|---|
| High-purity NR *2 | 100 | 100 | 100 | 100 |
| CB2 *4 | 50 | 50 | 50 | 50 |
| Silica *5 | 10 | 10 | 10 | 10 |
| Total CB Silica | 60 | 60 | 60 | 60 |
| Resin *6 | 3 | - | 6 | 9 |
| Antioxidant *7 | 1 | 1 | 1 | 1 |
| Vulcanization accelerator *8 | 1 | 1 | 1 | 1 |
| Heat buildup | 96 | 100 | 93 | 90 |
| Rupture resistance | 105 | 100 | 111 | 116 |
| Rupture resistance after aging | 106 | 100 | 112 | 118 |

**[Table 2]**

| | Example 2-1 | Example 2-2 | Example 2-3 | Example 2-4 | Comparative Example 2-1 | Comparative Example 2-2 | Comparative Example 2-3 |
|---|---|---|---|---|---|---|---|
| General-purpose NR *1 | - | - | - | - | 100 | - | 100 |
| High-purity NR *2 | 100 | 100 | 100 | 100 | - | 100 | - |
| CB1 *3 | - | - | - | - | 45 | - | - |
| CB2 *4 | 50 | 50 | 50 | 50 | - | 45 | 45 |
| Silica *5 | 10 | 10 | 10 | 10 | 20 | 20 | 20 |
| Total CB Silica | 60 | 60 | 60 | 60 | 65 | 65 | 65 |
| Resin *6 | 3 | 3 | 3 | 3 | 5 | - | - |
| Antioxidant *7 | 1 | 1 | 2 | 3 | 1 | 2 | 3 |
| Vulcanization accelerator *8 | 1 | 1.5 | 1.5 | 1.5 | 1 | 1 | 1 |
| Heat buildup | 107 | 113 | 110 | 108 | 100 | 94 | 96 |
| Wear resistance evaluation | 119 | 126 | 114 | 104 | 100 | 108 | 86 |
| Rupture resistance | 115 | 133 | 115 | 98 | 100 | 94 | 66 |
| Rupture resistance after aging | 110 | 108 | 104 | 100 | 100 | 105 | 92 |

| | | | | | | | |
|---|---|---|---|---|---|---|---|
| -1 TSR20 *2 High-purity natural rubber with a nitrogen content of 0.18 mass% obtained by centrifugal separation *3 Carbon black with N₂SA: 126 m²/g, DBP oil absorption: 92 ml/100g *4 Carbon black with N₂SA: 145 m²/g, DBP oil absorption: 99 ml/100g *5"Nipsil KQ" manufactured by Tosoh Silica Corporation *6 Dicyclopentadiene resin, softening point 140°C *7 N-(1,3-dimethylbutyl)-N'-phenyl-p-phenylenediamine, "Nocrac 6C" manufactured by Ouchi Shinko Chemical Industrial Co., Ltd. *8 At least one selected from thiazole vulcanization accelerator, sulfenamide vulcanization accelerator, guanidine vulcanization accelerator, thiuram vulcanization accelerator, and dithiocarbamate vulcanization accelerator. | | | | | | | |

From Table 1, it can be seen that each sample of a rubber composition for tread corresponding to the examples demonstrates excellent rupture resistance and rupture resistance after aging due to the addition of resin. Furthermore, from Table 2, it can be seen that each sample of a rubber composition for tread corresponding to the examples demonstrates a well-balanced and excellent result in terms of low heat generating property, wear resistance, and rupture resistance. On the other hand, it can be seen that each sample of a rubber composition for tread corresponding to the comparative examples is inferior to the examples in at least one evaluation item.

### INDUSTRIAL APPLICABILITY

According to the present disclosure, it is possible to provide a rubber composition for tread that is excellent in wear resistance and rupture resistance without deteriorating other physical properties.

Furthermore, according to the present disclosure, it is possible to provide a tire that is excellent in wear resistance and rupture resistance without deteriorating other physical properties.

## Claims

1. A rubber composition for tread comprising a rubber component, carbon black, silica, and a resin, wherein
the rubber component includes high-purity natural rubber having a nitrogen content of 0.3 mass% or less,
the resin has a softening point of 130°C or higher and a content of 1 part by mass or more per 100 parts by mass of the rubber component, and
total content of the carbon black and the silica is 50 parts by mass or more per 100 parts by mass of the rubber component.

2. The rubber composition for tread according to claim 1, wherein content of the antioxidant is not less than 0.7 parts by mass and less than 3 parts by mass per 100 parts by mass of the rubber component.

3. The rubber composition for tread according to claim 1 or 2, wherein the content of the resin is 10 parts by mass or less per 100 parts by mass of the rubber component.

4. The rubber composition for tread according to claim 1 or 2, wherein content of the carbon black is 40 parts by mass or more per 100 parts by mass of the rubber component.

5. The rubber composition for tread according to claim 1 or 2, wherein content of the silica is 5 parts by mass to 25 parts by mass per 100 parts by mass of the rubber component.

6. The rubber composition for tread according to claim 1 or 2, wherein the silica has a CTAB specific surface area of 200 ml/100 g to 240 ml/100 g.

7. The rubber composition for tread according to claim 1 or 2, wherein the vulcanization accelerator includes at least a sulfenamide vulcanization accelerator, and content of the sulfenamide vulcanization accelerator is 1 part by mass or more per 100 parts by mass of the rubber component.

8. The rubber composition for tread according to claim 1 or 2, wherein a mass ratio of the content of the resin to content of the vulcanization accelerator is 9 or less (content of resin/content of vulcanization accelerator ≤ 9).

9. A tire comprising the rubber composition for tread according to claim 1 or 2.
